# EUROPEAN PATENT SPECIFICATION

(11) **EP 1 600 944 B1**
(45) Date of publication and mention of the grant of the patent: **10.03.2010**
(21) Application number: 05010956.0
(22) Date of filing: 20.05.2005
(51) Int. Cl.: G10L 15/22

(54) **Application usage support system**
Unterstützungssystem für Applikationsanwendungen
Système d'assistance pour utiliser une application

(30) Priority: 27.05.2004 JP 2004157626
(43) Date of publication of application: 30.11.2005
(73) Proprietor: Universal Entertainment Corporation, Tokyo (JP)
(72) Inventor: Okada, Kazuo c/o Aruze Corp., Tokyo 135-0063 (JP); Fujimoto, Jun c/o Aruze Corp., Tokyo 135-0063 (JP)
(74) Representative: Kuhnen & Wacker

(56) References cited:
- WO-A-00/14727
- US-B1- 6 311 159
- JOSEPH POLIFRONI ET AL: "Towards the Automatic Generation of Mixed-Initiative Dialogue Systems from Web Content" EURO SPEECH 2003, September 2003 (2003-09), pages 193-196, XP007006913 Geneva (CH)
- PATENT ABSTRACTS OF JAPAN vol. 2003, no. 12, 5 December 2003 (2003-12-05) & JP 2004 030008 A (ARUZE CORP; SETA CORP), 29 January 2004 (2004-01-29)

## Description

### BACKGROUND OF THE INVENTION

### 1. Field of the Invention

The present invention relates to an application usage support system that serves as an interface between a user and an application, and more specifically to an application usage support system that sorts necessary information out of information acquired from a user and outputs optimum information on the basis of the sorted information using a so-called artificial intelligence (AI) function.

### 2. Description of the Prior Art

In recent years, in accordance with the development of the information processing technique and spread and development of information infrastructure, importance of information and distribution of the information has been recognized in business activities and the like. In companies, a large number of executives, employees, sales representatives collect new information every day, share the information with others to perform efficient activities, planning of more effective strategies, review and improvement of customer services, and the like. Such activities often determine consequences of competitions among companies.

Thus, many companies are improving environments allowing introduction and usage of various business systems such that a large number of people belonging to the companies can accumulate and share information.

When a user (an executive, an employee, or the like of a company) uses such business systems, the user inputs data to an appropriate storage destination from a terminal and accesses a database storing necessary data to acquire the necessary data. An example of such systems is described in Japanese Patent Laid-Open publication No. 2004-30008 (Fig. 14 and paragraphs 0079 to 0081).

An example of a speech controlled interactive user interface is disclosed in the patent document WO-A-00/14727.

### SUMMARY OF THE INVENTION

However, as business activities are diversified and complicated, an amount of information collected and accumulated by companies increases to be enormous and contents of the information also become very complicated. Therefore, when users extract and refer to information that the users require, the users need to fully understand what kind of data is stored and where the data is stored in order to reach data that the users actually require. However, it is difficult to cause all users to understand constitutions and contents of business systems. Therefore, requests and inquiries, which the users input to the business systems, do not result in what the users actually require.

It is an object of the invention as claimed in the appended claims to provide an application usage support system that sorts necessary information out of information acquired from a user and outputs optimum information on the basis of the sorted information.

The invention has characteristics as described below as means for solving the problems.

In a first aspect of the invention, this application usage support system is proposed as an application usage support system that serves as an interface between an application for accumulating information and outputting information as required and users of the application.

This application usage support system includes:
applicationexecutingmeans (e.g., anapplicationserver) that executes the application; first AI processing means (e.g., a definition-type AI) that receive input information from a user, applies AI processing to this input information according to a predetermined thinking routine, and transfers a processing result of the AI processing to application executing means; and second AI processing means (e.g., a learning-type AI) having a learning function that, when the first AI processing means does not accept process of the input information, execute AI processing on the input information and transfer a processing result of the AI processing to the application executing means.

Here, the "AI processing" means processing that uses a so-called artificial intelligence. The artificial intelligence is a realization technique for allowing a machine to execute what human beings execute using their intelligence. The "AI processing" in this context includes storage of knowledge, execution of inferences, edition of knowledge, explanation of conclusions, and process of ambiguities.

According to this aspect of the invention, information from users are sorted, supplemented, and corrected according to inferences. On the basis of the sorted, supplemented, and corrected information, the users are capable of inputting appropriate information to and acquiring appropriate information from applications such as a group of business applications even if the users do not have any knowledge about the applications.

In this application usage support system, the second AI processing means may be adapted to, when the second AI processingmeans do not accept process of the input information, output a reply for inquiring a meaning of this input information to the user in order to determine process of the input information.

Note that the invention is also realized even when the application usage support system uses second AI processing means that uses other learning methods.

The application usage support system may further include conversation engine means (a conversation engine) that interpret input information from a user according to a previous topic and transfer the interpreted input information to the first AI processing means.

According to such a constitution, it is possible to infer meaning of input information according to a flow of information (a subject of a conversation) between a user and an application system. Thus, a more accurate usage support effect can be expected.

According to the invention, information from users are sorted, supplemented, and corrected according to inferences. On the basis of the sorted, supplemented, and corrected information, the users are capable of using applications such as a group of business applications even if the users do not have any knowledge about the applications.

Additional objects and advantages of the invention will be set forth in the description which follows, and in part will be obvious from the description, or may be learned by practice of the invention. The objects and advantages of the invention may be realized and obtained by means of the instrumentalities and combination particularly pointed out hereinafter.

### BRIEF DESCRIPTION OF THE DRAWINGS

Fig. 1 is a block diagram showing an example of a configuration of an application system;
Fig. 2 is a block diagram showing an example of a configuration of a conversation engine;
Fig. 3 is a block diagram showing a modification of the configuration of the application system;
Fig. 4 is a block diagram showing a modification of the configuration of the application system; and
Fig. 5 is a block diagram showing a modification of the configuration of the application system.

The accompanying drawings, which are incorporated in and constitute a part of the specification, illustrate embodiments of the invention, and together with the general description given above and the detailed description of the embodiments given below, serve to explain the principles of the invention.

### DESCRIPTION OF THE PREFERRED EMBODIMENTS

An application usage support system according to an embodiment of the invention will be hereinafter explained with reference to the accompanying drawings.

### [1. Example of a configuration]

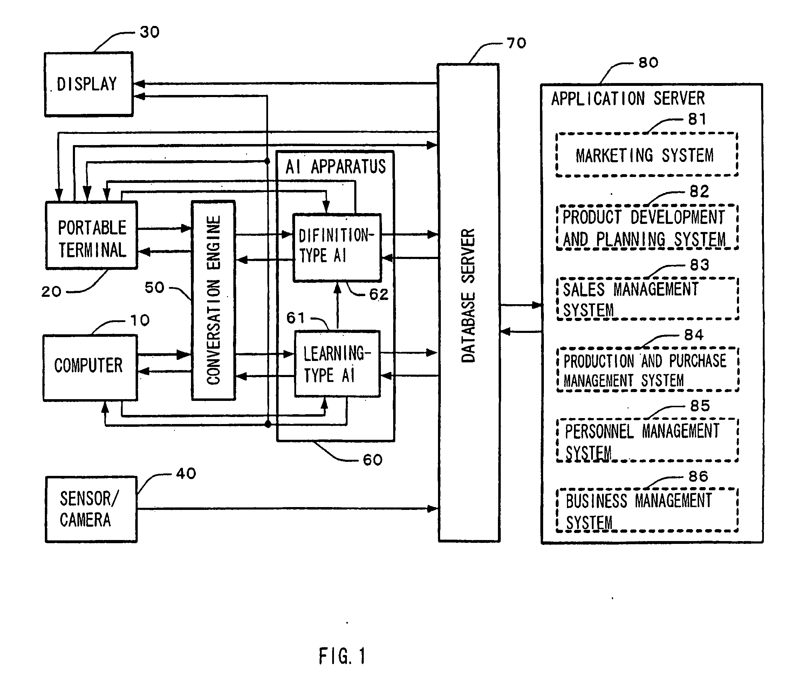

Fig. 1 is a block diagram showing an example of a configuration of an application system including the application usage support system.

### [1.1. Terminals]

An application system 1 has a computer 10, a portable terminal 20, a display 30, and a sensor/camera 40 that are terminals.

The computer 10 includes all apparatuses capable of transmitting and receiving information such as a so-called personal computer, a workstation, and a terminal dedicated machine. The computer 10 and a conversation engine 50 and an AI apparatus 60, which are explained later, are connected via a communication line or a communication network such a World Wide Web (WWW), Ethernet (a registered trademark of Fuji Xerox Co., Ltd.), or an intra-company LAN. Note that it is assumed that, when a computer having a wireless LAN connection function is connected to the conversation engine 50 and the AI apparatus 60, the computer falls under the category of the computer 10.

The portable terminal 20 may be any apparatus that is capable of transmitting and receiving information to and from the conversation engine 50 and the AI apparatus 60 via a mobile communication network. For example, the portable terminal 20 is a cellular phone, a Personal Data Assistant (PDA), and the like.

The display 30 is an apparatus that displays information, which is sent from the AI apparatus 60 and/or a database server 70 described later, as an image. For example, the display 30 is a liquid crystal display device, a CRT monitor, an EL display panel, or the like. The display 30 may have a speaker for reproducing voice or may be an apparatus like a street television that reproduces moving images attached with voice to show the moving images to plural users simultaneously.

The sensor/camera 40 is an apparatus that detects predetermined information and provides the database server 70 with the information. For example, the sensor/camera 40 is an infrared ray sensor or a video monitor that detects movements of players in a game arcade or a check-out counter that counts play balls on respective play tables or a ratio of paid-out coins or the like.

The camera generates and outputs image information, which is used in the AI apparatus 60 or the database server 70, such as user authentication, distinction of sex, and the like. The AI apparatus 60 or the database server 70 may operate to specify a person on the basis of this image information and, then, change data to be outputted according to personal information.

As the sensor, there is a finger print sensor, a voice sensor, and a position sensor. The finger print sensor and the voice sensor are used for processing for specifying a person and, then, changing data to be outputted according to personal information. The position sensor is used for, for example, processing for changing data to be outputted according to a location of an object.

### [1.2. Conversation engine]

The computer 10 and the portable terminal 20 are connected to the conversation engine 50.

The conversation engine 50 interprets input information from a user and, if necessary, translates this input information into input information including appropriate contents and transfers the information to the AI apparatus 60. In addition, the conversation engine 50 transfers information from the AI apparatus 60 to the computer 10 and the portable terminal 20.

### [1.2.1. Overall configuration]

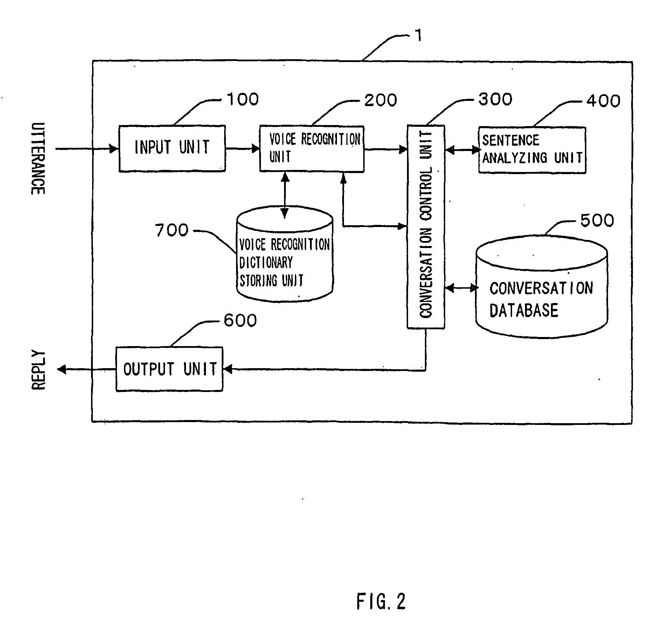

Fig. 2 is a schematic diagram of the conversation engine 50 according to this embodiment. As shown in Fig. 2, a conversation control apparatus 1 includes an input unit 100, a voice recognizing unit 200, a conversation control unit 300, a sentence analyzing unit 400, a conversation database 500, and an output unit 600, and a voice recognition dictionary storing unit 700.

### [1.2.2. Input unit]

The input unit 100 is a unit that acquires input information inputted from a user. Examples of the input unit 100 include a microphone. The input unit 100 changes voice corresponding to an acquired utterance content to a voice signal and outputs the voice signal to the voice recognizing unit 200.

### [1.2.3. Voice recognizing unit]

The voice recognizing unit 200 is a unit that, on the basis of the utterance content acquired by the input unit 100, specifies a character string corresponding to the utterance content. Specifically, when the voice signal is inputted from the input unit 100, the voice recognizing unit 200 collates the voice signal with a dictionary and the conversation database 500 stored in the voice recognition dictionary storing unit 700 on the basis of the inputted voice signal.

### [1.2.4. Voice recognition dictionary storing unit]

The voice recognition dictionary storing unit 700 is a unit that stores character strings corresponding to standard voice signals. The voice recognizing unit 200, which has performed the collation, specifies a character string corresponding to a word hypothesis, changes the specified character string to a character string signal, and outputs the character string signal to the conversation control unit 300.

### [1.2.5. Conversation database]

The conversation database 500 is a database that stores plural topic titles (second morpheme information) indicating one character, plural character strings, or combinations of the character and the character strings and plural reply sentences to users corresponding to utterance contents in association with one another in advance. In addition, plural reply types indicating types of the reply sentences are associated with the reply sentences.

Moreover, the conversation database 500 is a database that stores plural kinds of topic specifying information for specifying topics in advance. Specifically, in this embodiment, the "topic specifying information" means keywords related to input contents, which are expected to be inputted from the users, or the reply sentences to the users. Plural topic titles are associated with the topic specifying information. The reply sentences to the users are associated with the respective topic titles.

### [1.2.6. Sentence analyzing unit]

The sentence analyzing unit 400 is a unit that analyzes the character string specified by the input unit 100 and the voice recognizing unit 200. In this embodiment, the sentence analyzingunit 400 includes a character string specifyingunit, a morpheme extracting unit, a morpheme database, an input type judging unit, and an utterance type database.

The character string specifying unit divides the series of character string specified by the input unit 100 and the voice recognizing unit 200 for each clause.

The morpheme extracting unit is a unit that, on the basis of the character string of one clause divided by the character string specifyingunit, extracts respective morphemes forming a minimum unit of the character string as first morpheme information out of the character string of the clause. Here, in this embodiment, the morpheme means a minimum unit of words expressed as a character string. Examples of the minimum unit of a word structure include parts of speech such as a noun, an adjective, a verb, a particle, and a preposition.

The input type judging unit judges a type of an utterance content (an utterance type) on the basis of the character string specified by the character string specifying unit. In this embodiment, this utterance type means a "type of an utterance sentence". The "type of an utterance sentence" includes a declaration sentence (D: Declaration), a time sentence (T: Time), a location sentence (L: Location), and a negation sentence (N: Negation) . A sentence formed by the respective types is formed by a positive sentence or a question sentence. The "declaration sentence" means a sentence that indicates an opinion or an idea of a user. The "location sentence" means a sentence involving a locational concept. The "time sentence" means a sentence involving a temporal concept. The "negation sentence" means a sentence that is used to negate a declaration sentence.

The input type judging unit judges a "type of an utterance sentence" on the basis of the extracted morpheme and outputs the judged "type of an utterance sentence" to a reply acquiring unit included in the conversation control unit.

### [1.2.7. Conversation control unit]

In this embodiment, the conversation control unit 300 includes a managing unit, a topic specifying information retrieving unit, an abbreviated sentence complementing unit, a topic retrieving unit, and a reply acquiring unit.

The managing unit controls the entire conversation control unit 300.

The topic specifying information retrieving unit collates the extracted first morpheme information with the respective kinds of topic specifying information and retrieves topic specifying information, which matches amorpheme forming the first morpheme information, from the respective kinds of topic specifying information.

The abbreviated sentence complementing unit complements the first morpheme information using topic specifying information retrieved before (hereinafter referred to as "topic specifying information of attention") and topic specifying information included in the previous reply sentence (hereinafter referred to as "reply sentence topic specifying information") to thereby generate plural kinds of contemplated first morpheme information.

When a topic title is not determined by the abbreviated sentence contemplating unit, the topic retrieving unit collates the first morpheme information with respective topic titles corresponding to user input sentence topic specifying information and retrieves a topic title most suitable for the first morpheme information out of the respective topic titles .

On the basis of the topic title retrieved by the topic retrieving unit, the reply acquiring unit acquires a reply sentence associated with the topic title. In addition, on the basis of the topic title retrieved by the topic retrieving unit, the reply acquiring unit collates respective reply types associated with the topic title with the utterance type judged by the sentence interpreting unit and retrieves a reply type matching the judge utterance type out of the respective reply types.

### [1.2.8. Output unit]

The output unit is a unit that outputs the reply sentence acquired by the reply acquiring unit.

### [1.3. AI apparatus]

The conversation engine 50 interprets an input from a user and outputs a result of the interpretation to the AI apparatus 60. The AI apparatus 60 includes a definition-type AI 61 serving as the first AI processing means and a learning-type AI 62 serving as the second AI processing means that, when the definition-type AI 61 does not accept process of input information, executes AI processing including processing such as interpretation and inference on this input information and outputs a processing result of the AI processing.

On the basis of knowledge and rules prepared in advance, the definition-type AI 61 complements and corrects the input information inputted by the user such that a reply and information, which is predicted to be required by the user, becomes input information having a content returned from the database server 70.

The definition-type AI 61 performs prediction and the like of information required by a user on the basis of the rules prepared in advance. Thus, there is an advantage that processing time may be short.

On the other hand, like the definition-type AI 61, the learning-type AI 62 complements and corrects input information inputted by a user such that a reply and information, which is predicted to be required by the user, becomes input information having a content returned from the database server 70. However, depending on the rules prepared in advance, when the definition-type AI 61 cannot perform prediction of a real meaning of the input information and the complementation and the correction of the input information, the learning-type AI 62 issues a query for performing the prediction of a real meaning of the input information and the complementation and the correction of the input information to the user. On the basis of a reply of the user to the query, when the same input information is received in future, the learning-type AI 62 performs feedback learning processing for creating new rules that can be treated.

The new rules created by the learning-type AI 62 may be incorporated in the rules prepared in advance of the definition-type AI 61 when, after evaluation of the rules by the learning-type AI 62, a predetermined evaluation is obtained.

### [1.4. Database server]

The database server 70 accumulates data and, in response to a request from the AI apparatus 60, extracts data corresponding to the request out of the accumulated data and outputs the data. In addition, the database server 70 accumulates data generated and processed in respective systems 81 to 86 in an application server 80 described later or supplies the accumulated data in response to a request from the respective systems 81 to 86.

### [1.5. Application server]

The application server 80 is a server that is mounted with one or plural applications, each of which constitutes a system, and executes the applications.

The systems mounted on the application server 80 may be a server formed by any application that is usable by a user. Examples of the systems mounted on the application server 80 are enumerated.

### (1) Marketing system

A marketing system 81 is a system for supporting mainly marketing activities of a company. For example, there are a system that records plans and contents of sales representatives in a form of a daily report and informs an administrator or the like of a difference between sales target information and an attained result (e.g., the system described in Japanese Patent Application No. 2003-273525), a system that extracts customers present around a user and informs the user of the customers (e.g., Japanese Patent Application No. 2003-379066), a system that judges reliability of daily report information form a movement history of a day of a user (e.g., Japanese Patent Application No. 2003-382699), and the like.

### (2) Product development and planning system

A product development and planning system 82 is a system for supporting mainly planning and development of new products, services, and the like. As an example, there are a system that changes a security level of registered information according to a progress state of development (e.g., Japanese Patent Application No. 2003-408431), a system that makes it possible to identify a security level of registered information according to a color of link display (e.g., Japanese Patent Application No. 2003-411651), and the like.

### (3) Sales management system

A sales management system 83 is a system for managing a sales quantity of products, a sales amount, a planned quantity of sales, time for replacement with products in the next period, and the like. It is conceivable that the sales management system 83 is referred to by sales representatives in order to perform management through figures and set up sales strategies in respective sales department, branches, and sales shops or referred to by development and planning officers in order to find and analyze hot items.

### (4) Production and purchase management system

A production and purchase management system 84 is a system for performing production management for products and purchase management for row materials and parts. For example, the production and purchase management system 84 is used for management of a production plan, a delivery management, management of a purchase ratio of row materials and parts, and the like in a factory or used by a sales side for confirmation of a degree of rare stocks of popular products and planned delivery time. As an example, there is a system that makes it possible to grasp a history of respective units (parts, components) forming an apparatus and perform reuse of the respective units effectively (e.g., Japanese Patent Application No. 2002-182696).

### (5) Personnel management system

A personnel management system 85 is a system that manages personnel and labor related information. As an example, there are a system for performing prior/posterior application for overtime and holiday work (e.g., Japanese Patent Application No. 2003-301806) and a system for performing automatic application for lateness according to an entrance and exit record of an ID card or the like (e.g., Japanese Patent Application No. 2003-345798).

### (6) Business management system

A business management system 86 is a system that is used for analysis of work, evaluation of work, cost accounting, and the like. For example, there are a system that is used for counting and analyzing man-hour for each employee for each work item of a daily report input (e.g., Japanese Patent Application No. 2002-349266), a system that calculates an evaluation score according to a result of work due date management (e.g., Japanese Patent Application No. 2002-349265), and a system that counts man-hour of each employee for each work item of a daily report input and calculates work cost by multiplying the counted value by a work unit price (e.g., Japanese Patent Application No. 2002-349267).

Applications or systems mounted on the application server 80 are not meant to be limited to the above. Any application and system mounted on the application server 80 belong to the scope of the invention as long as the application and the system are used by a user.

### [2. Example of an operation of the application system]

Next, an example of an operation of the application system 1 will be explained.
(1) A user inputs input information, which is a request message for desired information, from the computer 10 or the portable terminal 20 serving as the terminal in order to obtain the desired information. The input information is transferred to the conversation engine 50 serving as the conversation interface from the computer 10 or the portable terminal 20.
(2) The conversation engine 50 analyzes the input information and supplements the input information with other information and corrects the input information to input information that can be recognized by the definition-type AI 61.
(3) The definition-type AI 61 judges a meaning of this input information according to the rules prepared in advance. When the definition-type AI 61 can judge the meaning, the definition-type AI 61 issues an information extraction request, an information registration request, or the like corresponding to the meaning to the database server 70. In response to the information extraction request, the information registration request, or the like, the database server 70 extracts necessary information from the accumulated information and returns the information to the user. Alternatively, the database server 70 requests the application server 80 to perform processing, obtains a result of the processing, and returns the result to the user.
(4) On the other hand, when the definition-type AI 61 does not accept the meaning of the input information, the definition-typeAI 61 requests the learning-typeAI 62 to judge the meaning of the input information. First, the learning-type AI 62 judges the meaning on the basis of contents learned in the past. When the learning-type AI 62 does not accept the meaning on the basis of the contents learned in the past or when the contents are insufficient, the learning-type AI 62 issues a query to the user and decides the meaning on the basis of a reply to the query. The learning-type AI 62 creates new rules on the basis of a result of the decision and stores the rules (feedback learning) . In this way, the learning-type AI 62 can judge the meaning of the inputted information by performing the feedback learning. Thus, it is possible to cope with a situation exceeding the rules prepared in advance.

### [3. Other Embodiments]

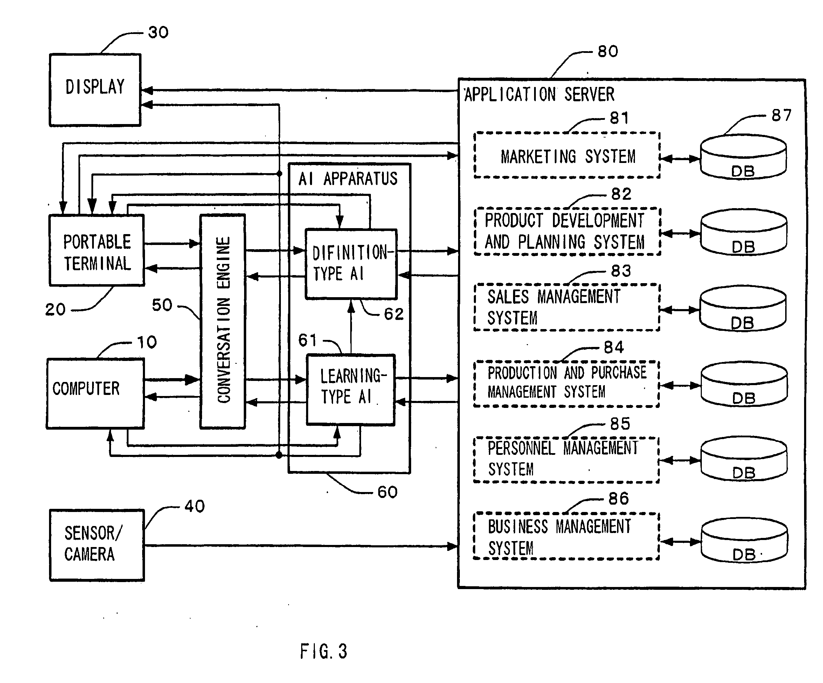

Figs. 3, 4, and 5 show modifications of the application system 1 (more specifically, the application usage support system).

### [3.1. Second Embodiment]

Fig. 3 is a block diagram showing a modification of the application system 1. In this modification, the database server 70 is not provided and databases 87 for respective systems are provided in the application server 80. The application system 1 in the modification is the same as the application system 1 shown in Fig. 1 in other points. The databases 87 does not always have to be provided in the application server 80 and may be independent from the application server 80.

### [3.2. Third Embodiment]

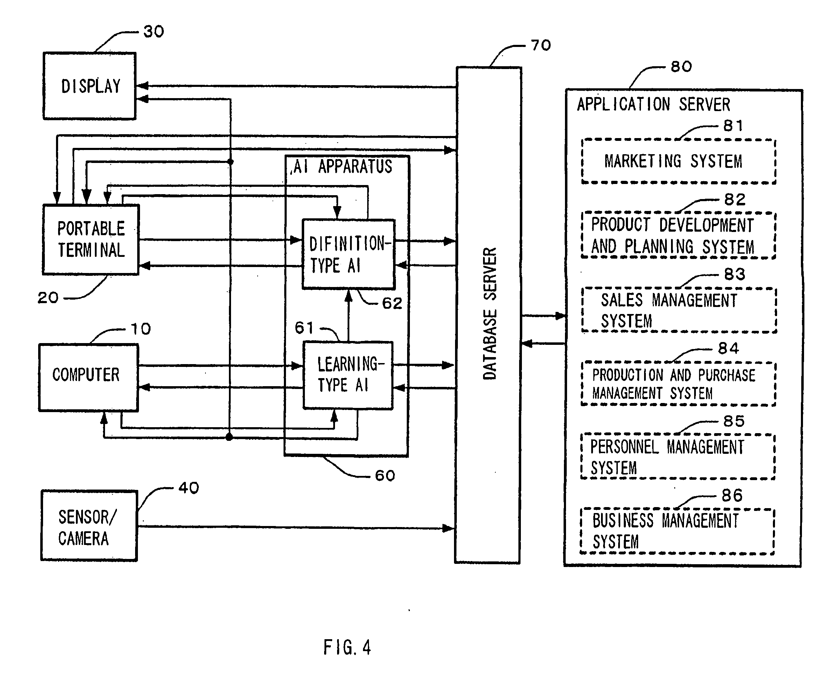

Fig. 4 is a block diagram showing another modification of the application system 1. In this modification, the conversation engine 50 is not provided and input information from the computer 10 or the portable terminal 20 is transferred to the definition-typeAI 61 directly. The application system 1 in the modification is the same as the application system 1 shown in Fig. 1 in other points.

The definition-type AI 61 analyzes input information and predicts a meaning and contents of the input information. When voice recognition is not required, the application system 1 in this modification can show the same function as the application system 1 shown in Fig. 1. Thus, the application system 1 in this embodiment is useful in an environment in which information is inputted only as character data and image data without using voice data.

### [3.3. Fourth Embodiment]

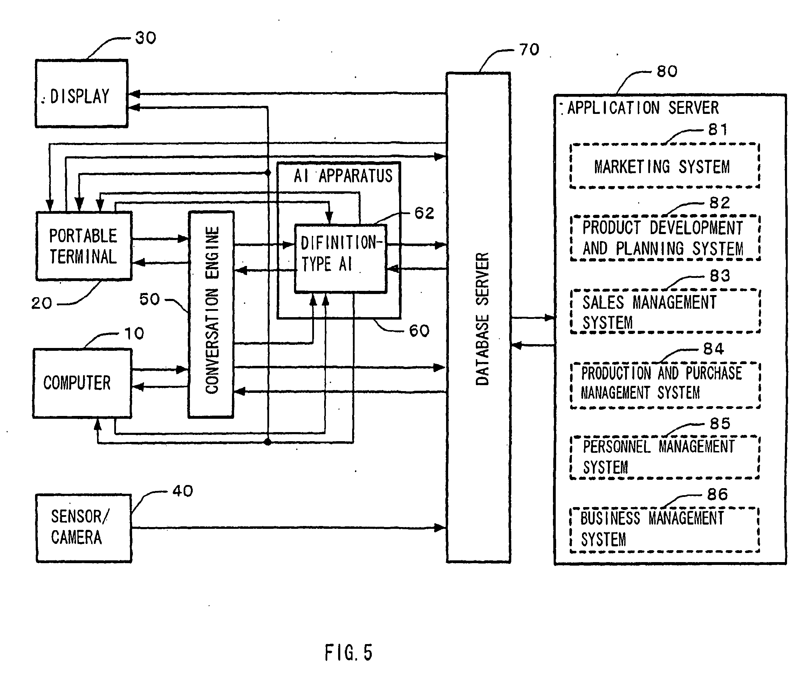

Fig. 5 is a block diagram showing still another modification of the application system 1. In this modification, the definition-type AI 61 is not provided and the conversation engine 50 plays a role of the definition-type AI 61. The application system 1 in the modification is the same as the application system 1 shown in Fig. 1 in other points.

When the conversation engine 50 interprets input information, the interpretation of the input information includes prediction of a meaning and contents of the input information. According to this modification, since it is possible to reduce a load of processing of the definition-type AI 61, faster processing can be expected.

Additional advantages and modifications will readily occur to those skilled in the art. Therefore, the invention in its broader aspects is not limited to the specific details or representative embodiments shown and described herein. Accordingly, various modifications may be made without departing from the scope of the invention as defined by the appended claims.

## Claims

1. An application usage support system that serves as an interface between an application for accumulating information and outputting information as required and a user of the application, comprising:
application executing means that executes the application;
first artificial intelligence AI processing means for receiving input information from the user, applying AI processing to the input information according to a predetermined thinking routine, on the basis of rules prepared in advance and transferring a processing result of the AI processing to the application executing means; and
second artificial intelligence AI processing means having a learning function for, when the first AI processing means can not perform prediction of a meaning of the input information, executing AI processing on the input information and transferring a processing result of the AI processing to the application executing means,
wherein, when the second AI processing means does not accept the meaning of the input information on the basis of contents learned in the past, the second AI processing means is adapted to output a query for inquiring the meaning of the input information to the user in order to decide the meaning and to create a new rule.

2. The application usage support system according to claim 1, wherein, the second AI processing means performs feedback learning process to create the new rule for processing the input information on the basis of a result of said decision.

3. The application usage support system according to claim 2, wherein, the new rule created by the second AI processing means is incorporated in the rule prepared in advance of the first AI processing means.

4. The application usage support system according to any one of the claims 1-3, further comprising conversation engine means for analyzing the input information from the user according to a previous topic and transferring the interpreted input information to the first AI processing means.

5. The application usage support system according to claim 4, wherein, the conversation engine includes the first AI processing means.

## Patentansprüche

1. Anwendungsnutzungs-Unterstützungssystem, das als eine Schnittstelle zwischen einer Anwendung zum Ansammeln von Informationen und Ausgeben von Informationen nach Bedarf und einem Benutzer der Anwendung dient, aufweisend:
eine Anwendungsausführungseinrichtung, die die Anwendung ausführt;
eine erste künstliche Intelligenz-Verarbeitungseinrichtung zum Empfangen von eingegebenen Informationen von dem Benutzer, Anwenden der Verarbeitung durch die künstliche Intelligenz auf die eingegebenen Informationen gemäß einer vorbestimmten Denkroutine auf der Basis von im Vorfeld erstellten Regeln und Übertragen eines Verarbeitungsergebnisses der Verarbeitung durch die künstliche Intelligenz an die Anwendungsausführungseinrichtung; und
eine zweite künstliche Intelligenz-Verarbeitungseinrichtung mit einer Lernfunktion um, wenn die erste künstliche Intelligenz-Verarbeitungseinrichtung eine Prognose einer Bedeutung der eingegebenen Informationen nicht ausführen kann, eine Verarbeitung durch die künstliche Intelligenz anhand der eingegebenen Informationen auszuführen und ein Verarbeitungsergebnis der Verarbeitung durch die künstliche Intelligenz an die Anwendungsausführungseinrichtung zu übertragen,
wobei, wenn die zweite künstliche Intelligenz-Verarbeitungseinrichtung die Bedeutung der eingegebenen Informationen auf der Basis der in der Vergangenheit erlernten Inhalte nicht akzeptiert, die zweite künstliche Intelligenz-Verarbeitungseinrichtung dazu in der Lage ist, eine Abfrage zum Anfordern der Bedeutung der eingegebenen Informationen an den Benutzer auszugeben, um die Bedeutung festzulegen und eine neue Regel zu erzeugen.

2. Anwendungsnutzungs-Unterstützungssystem nach Anspruch 1, wobei die zweite künstliche Intelligenz-Verarbeitungseinrichtung einen Feedback-Lernprozess zum Erzeugen der neuen Regel zum Verarbeiten der eingegebenen Informationen auf der Basis eines Ergebnisses der Festlegung ausführt.

3. Anwendungsnutzungs-Unterstützungssystem nach Anspruch 2, wobei die neue Regel, die durch die zweite künstliche Intelligenz-Verarbeitungseinrichtung erzeugt wird, in die Regel eingebaut wird, die im Vorfeld von der ersten künstlichen Intelligenz-Verarbeitungseinrichtung erstellt wurde.

4. Anwendungsnutzungs-Unterstützungssystem nach einem der Ansprüche 1 bis 3, ferner aufweisend eine Konversationsmaschineneinrichtung zum Analysieren der eingegebenen Informationen von dem Benutzer gemäß einem vorausgegangenen Thema und Übertragen der interpretierten eingegeben Informationen an die erste künstliche Intelligenz-Verarbeitungseinrichtung.

5. Anwendungsnutzungs-Unterstützungssystem nach Anspruch 4, wobei die Konversationsmaschine die erste künstliche Intelligenz-Verarbeitungseinrichtung beinhaltet.

## Revendications

1. Système de support d'utilisation d'application qui sert d'interface entre une application pour accumuler des informations et sortir des informations tel que requis et un utilisateur de l'application, comprenant :
des moyens d'exécution d'application qui exécutent l'application ;
des premiers moyens de traitement AI, intelligence artificielle, pour recevoir des informations d'entrée en provenance de l'utilisateur, appliquer un traitement AI aux informations d'entrée selon une routine de pensée prédéterminée sur la base de règles préparées à l'avance, et transférer un résultat de traitement du traitement AI aux moyens d'exécution d'application ; et
des seconds moyens de traitement AI, intelligence artificielle, ayant une fonction d'apprentissage pour, lorsque les premiers moyens de traitement AI ne peuvent pas effectuer une prédiction d'une signification des informations d'entrée, exécuter un traitement AI sur les informations d'entrée et transférer un résultat de traitement du traitement AI aux moyens d'exécution d'application,
dans lequel, lorsque les seconds moyens de traitement AI n'acceptent pas la signification des informations d'entrée sur la base de contenu appris par le passé, les seconds moyens de traitement AI sont adaptés pour sortir une interrogation pour demander la signification des informations d'entrée à l'utilisateur afin de décider de la signification et créer une nouvelle règle.

2. Système de support d'utilisation d'application selon la revendication 1, dans lequel les seconds moyens de traitement AI effectuent un processus d'apprentissage par rétroaction afin de créer la nouvelle règle pour traiter les informations d'entrée sur la base d'un résultat de ladite décision.

3. Système de support d'utilisation d'application selon la revendication 2, dans lequel, la nouvelle règle créée par les seconds moyens de traitement AI est incorporée dans la règle préparée à l'avance des premiers moyens de traitement AI.

4. Système de support d'utilisation d'application selon l'une quelconque des revendications 1 à 3, comprenant en outre des moyens de moteur de conversation pour analyser les informations d'entrée provenant de l'utilisateur selon un sujet précédent et transférer les informations d'entrée interprétées aux premiers moyens de traitement AI.

5. Système de support d'utilisation d'application selon la revendication 4, dans lequel, le moteur de conversation comprend les premiers moyens de traitement AI.
